# EUROPEAN PATENT SPECIFICATION

(11) **EP 1 061 482 B1**
(45) Date of publication and mention of the grant of the patent: **04.02.2004**
(21) Application number: 00202089.9
(22) Date of filing: 16.06.2000
(51) Int. Cl.: G07F 7/10

(54) **Method, system, and apparatus for transmitting, receiving, and displaying information**
Verfahren, System und Vorrichtung zum Übertragen, Empfangen und Anzeigen von Informationen
Méthode, système et dispositif pour transmettre, recevoir et afficher des informations

(30) Priority: 18.06.1999 US 139732 P
(43) Date of publication of application: 20.12.2000
(73) Proprietor: Citicorp Development Center, Inc., Los Angeles, California 90066 (US)
(72) Inventor: DO, Cuong D., RESEDA, CA 91335 (US); RIZZO, Carol J., LIVINGSTON, NJ 07039 (US); WILLIAMS, Leon, SUMMIT, NJ 07901 (US)
(74) Representative: Johansson, Lars E.

(56) References cited:
- WO-A-99/08238
- US-A- 5 319 582

## Description

### CROSS-REFERENCE TO RELATED APPLICATIONS

This application claims priority from applicants' copending U.S. Provisional Application No. 60/139,732 filed June 18, 1999.

### BACKGROUND OF THE INVENTION

The present invention relates generally to methods, systems, and devices for transmitting, receiving, and displaying information. More specifically, one embodiment of the present invention is an augmented personal digital assistant (PDA), or alternatively a personal financial assistant (PFA) having magnetic and smart card reading/writing features, financial software, biometric verification features, timed information removal features, and automatic communications capabilities to interface with other PDAs or automated teller machines (ATMs).

In many circumstances, the ability to access information and utilize financial services is dependent upon the ability to carry multiple cards, such as credit and debit cards. These cards may take the form of magnetic stripe cards or smart cards. There are, however, several problems with consumers carrying numerous cards. These cards add weight and bulk to a consumer's wallet or purse, and present increased opportunities for loss or theft. As a result, consumers may limit the numbers of card accounts they maintain, thereby limiting potential business opportunities for financial services providers.

Additionally, these cards generally have expiration dates, making it necessary for routine replacement. This leads to a two-fold problem, first, consumers may forget to replace an expired card, and, second, card providers must routinely reissue new cards. Significant costs are incurred in the administration and replacement of these cards.

Not only is there a problem with the number of cards necessary to access various services; increasingly, people are carrying electronic organizers, laptop computers, cellular telephones, and other microcomputer based devices. These devices have become indispensable tools for many people. Accordingly, there is a need for an effective method, system, and device that consolidate financial services cards with microcomputer based devices.

From WO 99/08238 there is known a PDA which uses a universal smart card for financial transactions whereby the PDA communicates wirelessly (RF or IR) with a service provider (ATM or POS), wherein the user verification is based on biometric information (retinal pattern). This known system eliminates some of the deficiencies mentioned above, but has some shortcomings, e.g. different kind of activities by the user is a requirement to establish communication.

### SUMMARY OF THE INVENTION

The above identified shortcomings are overcome by the present invention, which provides an information and transaction processing system as set out in claim 1.

Further, there is provided a method for performing an electronic transaction with an information and transaction processing system as set out in claim 11.

In general terms the invention relates to a universal card system with an integrated PDA/PFA (hereinafter referred to as "the device" of the present invention). The device includes all known features of a pocket PDA, and additionally includes card reading/writing capabilities, timed information removal features, biometric verification tools, wireless transmission features, automatic transmission of information, and e-commerce and banking software.

The present invention benefits both the consumer, as well as, financial services providers. The consumer benefits by the reduction in the number of cards to be carried, improved security, consolidation of personal financial information, and access to a banking network. Consolidation results because the user will have a personal identification number (PIN) in which to program the universal card into a desired credit card, debit card, charge card etc. Further, security is enhanced because the data encoded on the universal card erases after a preset period and/or on demand, thereby returning the universal card into its generic status after a transaction.

The consolidation of financial information is further enhanced because, for example, all credit, charge, and debit card information, as well as, electronic receipts and transaction statements are stored on a single device, and may be displayed and downloaded. Because of the considerable banking services provided by the pocket-sized device, the invention can essentially be viewed as a "Bank in Pocket" device.

An embodiment of the invention provides for the use of the device to access electronic data and services through long range, omni directional RF transmission, as well as, shorter range, unidirectional IRDA transmission. Infrared transmission in the present invention, for example, allows the user of the device to establish a two-way IRDA link with a home personal computer (PC), thereby uploading data onto the home PC database, as well as, downloading data onto the device.

The financial services provider associated with the present invention benefits because there will be fewer physical cards issued, and transactional information is made available to consumers in electronic form. Security is also enhanced and a precise audit trail can be established. Further, the invention may serve as an open platform between financial institutions.

The basic hardware of an embodiment of the present invention includes a central processing unit (CPU) and memory connected to a battery, a display, a user interface, an RF transceiver, an IRDA transceiver, a data encryption standard (DES) processor, and flash memory. The embodiment also includes biometrics hardware and a Rivest, Shamir, Adelman (RSA) encryption chip, as well as, a card encoding capability.

Although the embodiments shown depict a highly portable device, the present invention is not restricted to a handheld configuration. The present invention may be incorporated as part of a personal computer. Additionally, the present invention may be permanently installed as part of a system to serve individuals located in a certain location, such as at a kiosk, in a car, on board an aircraft, or other conveyance.

Data input may be performed via a keypad, a touch screen, or a stylus, as well as, through speech recognition. The present invention can incorporate a combination of these data input features. Furthermore, an embodiment provides wireless Internet access capability. The screen and the keypad of one embodiment is oriented in a side-by-side configuration. A protective shell or cover supports and protects the device in a manner not to interfere with data transmissions. An embodiment of the present invention also includes features of a portable cellular phone or pager, or a combination thereof, making the device a unitary item so that consumers may carry a single, multi-purpose piece of hardware.

The ability to access information contained in the present invention is determined by the authorized user of the device. Access to different types of information stored on or received through the device may be varied. Certain information may be made available to anybody who comes in contact with the device. For example, medical personnel may have immediate access to the user's medical/health information. In one embodiment, a special emergency key is included on the device to make it easy for medical personnel to retrieve the user's medical/health information.

The system according to claim 1 allows for the automatic transmission of information. This provides the advantage of enhanced customer service. For example, if a bank customer and bank are both utilizing an embodiment of the inventive system, the bank teller may automatically have the customer's information displayed as the customer approaches. This allows the teller to greet the customer by name and also, for example, preview the customer's account information.

Further, by using the IRDA or RF transceiver, a user may pre-program a transaction, for example, the withdrawal of money from an ATM so that the user does not have to wait to enter all the transaction information while physically at the ATM. In this embodiment, as the user approaches an "on-us" ATM, even while in a car, for example, the RF or IRDA transmission allows the ATM to receive, and temporarily store, the user's information. Then, as the user approaches the ATM, a biometrics verification process matches transmitted biometric data from the device with the observed characteristics of the user and, upon satisfactory verification, automatically processes the user's pre-programmed transaction. After this transaction is completed, a receipt is electronically transferred to the device, eliminating the need for a paper receipt and further increasing the speed and security of such transactions. Further, the invention allows financial institutions to more quickly and effectively tailor information to specific individuals.

A variety of information is stored in the device. Some examples include information regarding credit card accounts, checking accounts, savings accounts, health insurance, frequent flyer awards, safe deposit box identification, telephone calling card accounts, and driver's license information. Other types of information may also be stored using the present invention.

An embodiment utilizes both magnetic stripe cards, as well as, smart cards as the universal card. Although there has been a lot of movement towards smart cards, magnetic stripe cards will continue to be utilized as long as the vast magnetic stripe infrastructure continues to exists. An object of the present invention is to allow users access to existing, as well as emerging technologies.

The present invention has a number of security features. An embodiment has a data encryption standard processor having a fixed internal unreadable key, as well as an RSA chip for public key encryption. A personal identification number (PIN) may be selected and entered by the user of the present invention. Additionally, card identification numbers (CINs) are assigned to various cards belonging to the user. For added security, biometrics data is stored in the present invention, to further ensure that only authorized users are able to use the device. This may include fingerprint, thumbprint, palm print, or an IrisCode. Furthermore, the device erases information added to the universal cards upon user initiation or after a predetermined time interval.

Banking may be conducted from a user's home (not claimed), either with or without a personal computer. By installing a low cost RF modem between the user's home phone and the wall jack, a user may access his/her home banking network. Point of sale transactions may also be performed with the device, either with a universal card or through wireless transmission. For point of sale transactions, the user would enter a PIN and use the device to select the card he/she wishes to use for the purchase. The device would then write the necessary information onto the universal card. The universal card would then be swiped through a point of sale terminal that is connected to a point of service network. The transaction would then proceed and the purchase would be completed.

For wireless point of sale transactions, the data stored in the device would be transmitted wirelessly via an RF or IRDA transceiver to an RF or IRDA modem at the point of sale, the modem being connected to a point of sale network.

Further aspects and advantages of the present invention will be more clearly apparent to those skilled in the art during the course of the following description, references being made to the accompanying drawings which illustrate some embodiments of the present invention and wherein like characters of reference designate like parts throughout the drawings.

### BRIEF DESCRIPTION OF THE DRAWINGS

FIGURE 1 is a perspective view of one embodiment of the present invention;
FIGURE 2 is a perspective view of another embodiment of the present invention;
FIGURE 3 is a perspective view of another embodiment of the present invention;
FIGURE 4 is a block diagram showing the basic hardware and optional hardware of one embodiment of the present invention;
FIGURE 5 is a diagram illustrating the enrollment of a new user;
FIGURE 6 is a diagram illustrating the interaction between one embodiment of the present invention with an "on-us" ATM, shared network ATM, and POS terminal;
FIGURE 7 is a diagram further illustrating the interaction between one embodiment of the present invention and an "on-us" ATM;
FIGURE 8 is a diagram further illustrating the interaction between one embodiment of the present invention and a shared network ATM;
FIGURE 9 is a diagram further illustrating the interaction between one embodiment of the present invention and a POS terminal;
FIGURE 10 is a diagram illustrating the interaction between one embodiment of the present invention and a POS terminal in a passive mode;
FIGURE 11 is a diagram illustrating the interaction between one embodiment of the present invention and a home banking network;
FIGURE 12 is a diagram illustrating the interaction between one embodiment of the present invention and a personal computer; and
FIGURE 13 is a diagram illustrating the an information updating embodiment of the present invention.

### DETAILED DESCRIPTION OF A PREFERRED EMBODIMENT

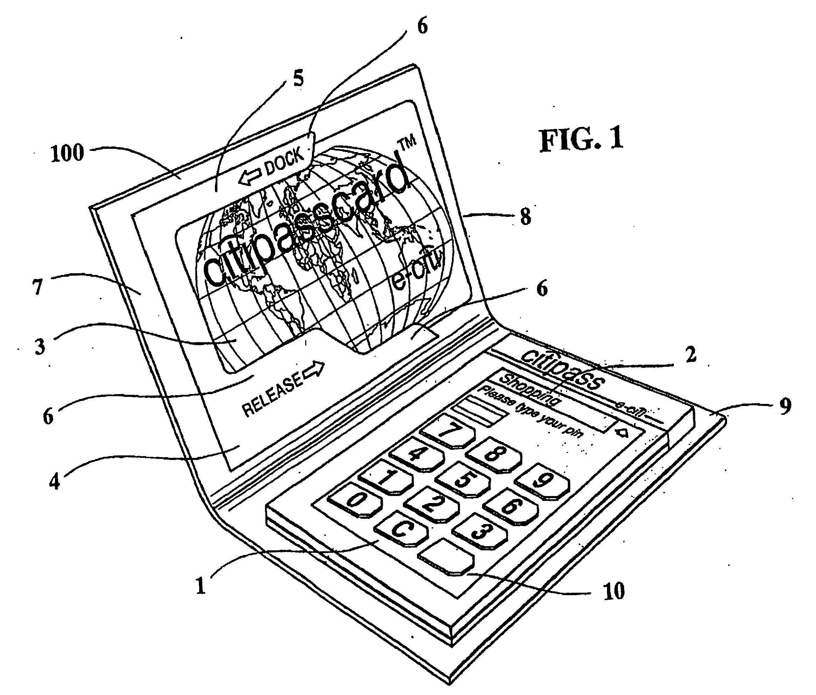

For the purposes of promoting an understanding of the principles of the invention, references will now be made to several embodiments of the present invention as illustrated in **FIGURES 1-13**. It will be understood that no limitation of the scope of the invention is thereby intended. The terminology used herein is for the purpose of description and not limitation. The present invention covers modifications and variations that come within the scope of the appended claims.

Referring now to **FIGURE 1**, there is shown a perspective view of one embodiment of the device **100** of the present invention. The device **100** has a user interface **1** and display **2**. The user interface **1** shown is a keypad. Alternate embodiments include a touch screen interface/display. Also shown is universal card **3** as seen when stored in a card reader/writer **4**. The card reader/writer **4** includes a docking port **5** with lips **6** to hold the universal card **3**. The lips **6** are adjacent to the top and bottom portion of the card. Protective cover **7** is shown supporting and protecting the device **100** so as not to interfere with any data transmissions. The protective cover **7** is segmented by two panels **8** and **9**. The interface includes an emergency key **10** that provides medical and/or contact information. Another embodiment provides for emergency communication with a third party via cellular telephone. The information accessed via the emergency key **10** is preauthorized by the authorized user for access by others.

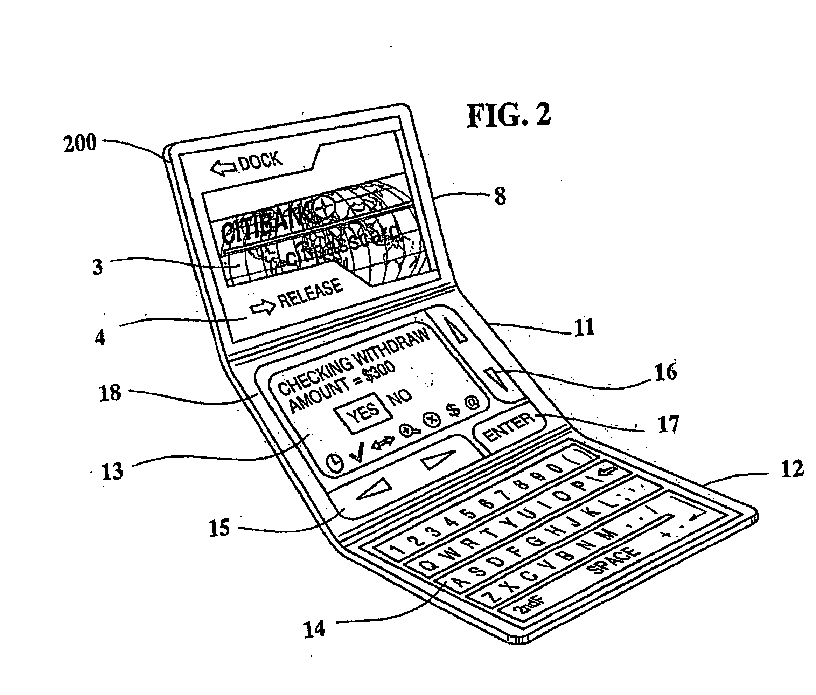

Referring now to **FIGURE 2**, there is shown a perspective view of another embodiment of the device **200**. In this embodiment, the protective cover **18** has three panels with the docking port located on the top panel **8**, the display on the center panel **11**, and the primary interface located on the lower panel **12**. The display **13** is a liquid crystal display (LCD). User interface is located on panels **11** and **12**. The alpha-numeric keypad **14** is located on the lower panel **12**, with the scrolling arrows **15** and **16** and an enter key **17** located on the center panel **11**. Again, universal card **3** is shown stored in the docked position in the card reader/writer **4**.

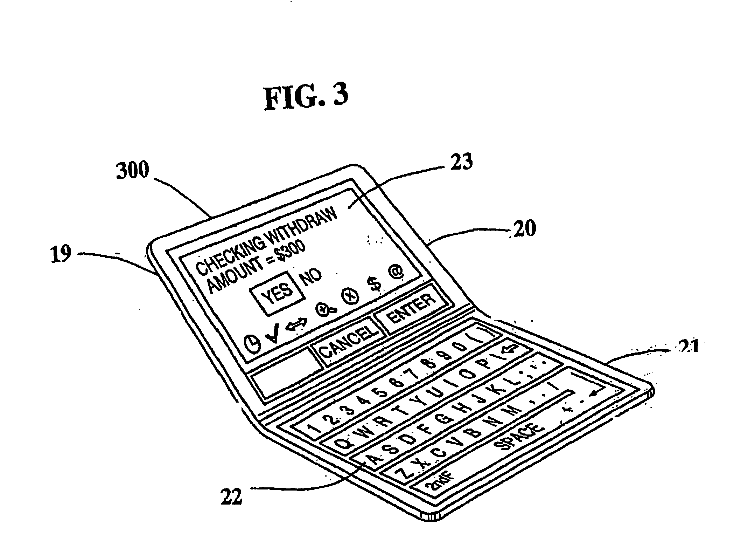

Referring now to **FIGURE 3**, an embodiment of the device **300** is shown without the card reading/writing feature. The protective cover **19** has two panels **20** and **21**. The primary interface **22** is located on the lower panel **21**. The display/interface **23** is located on the upper panel **20**. The display/interface **23** being an LCD, allowing for data entry with a stylus. As is evident in **FIGURE 3**, the embodiments in **FIGURE 1** and **FIGURE 2** do not require card reading/writing features to perform other functions, for example encrypted wireless data transmission.

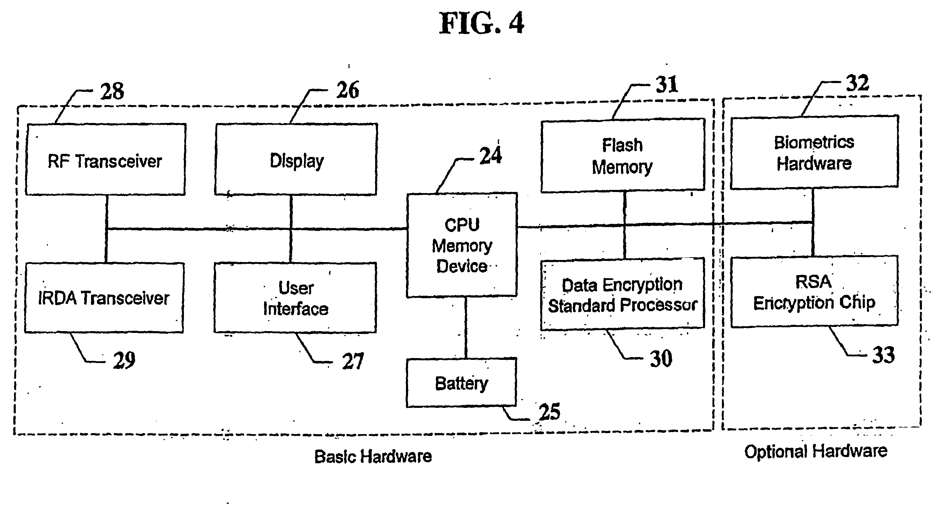

Referring now to **FIGURE 4**, there is shown a block diagram displaying the basic hardware, and some optional hardware, of one embodiment of the present invention. The basic hardware of the present invention includes a central processing unit (CPU) and memory device **24**. CPU **24** is operatively connected to battery **25**, display **26**, user interface **27**, RF transceiver **28**, and IRDA transceiver **29**. Also operatively connected to CPU **24** is data encryption standard (DES) processor **30** and flash memory **31**. There is also some optional hardware that may be operatively connected to CPU **24**, including, but not limited to, biometrics hardware **32** and RSA chip **33**.

CPU **24** controls the present invention by executing programs stored within its memory. Display **26** may be any type and size of the various data/command displays available, and is preferably a liquid crystal display (LCD) having graphics capabilities. User interface **27** may be any type of user-friendly interface for data/command entry such as a stylus, touch screen, speech recognition, or other data entry systems. User interface **27** may also be incorporated into display **26**, instead of being separate from display **26**. RF transceiver **28** is a radio frequency transceiver capable of two-way data transfer between the device and an ATM, a bank teller station, other PDAs, or a greeting station; and is preferably a wireless RF transceiver with a ten meter omni-directional range. IRDA transceiver **29** is an infrared optical data transceiver capable of short range infrared communication with other infrared devices, such as PDAs and personal computers for data uploading and downloading, the IRDA transceiver preferably having a one meter directional range.

DES processor **30** is included for security purposes. DES processor **30** utilizes a symmetric-key encryption method and is preferably a 56 bit encryption processor containing a fixed internal unreadable key. A triple DES is provided for additional security. RSA chip **33** is for performing public key encryption.

The flash memory **31** is for storing data and programs for easier updating. Biometrics hardware **32** may be any conventional type of biometrics hardware capable of storing encrypted personal authenticating information such as a user's fingerprint, thumbprint, palm print, IrisCode or combination thereof. Biometrics hardware **32** is included as a security measure to supplement the personal identification number (PIN), terminal identification number (TIN) and card identification number (CIN) security code systems of the present invention. In one embodiment, the biometrics hardware **32** stores an enrolled personal IrisCode (512 Bytes) in encrypted mode.

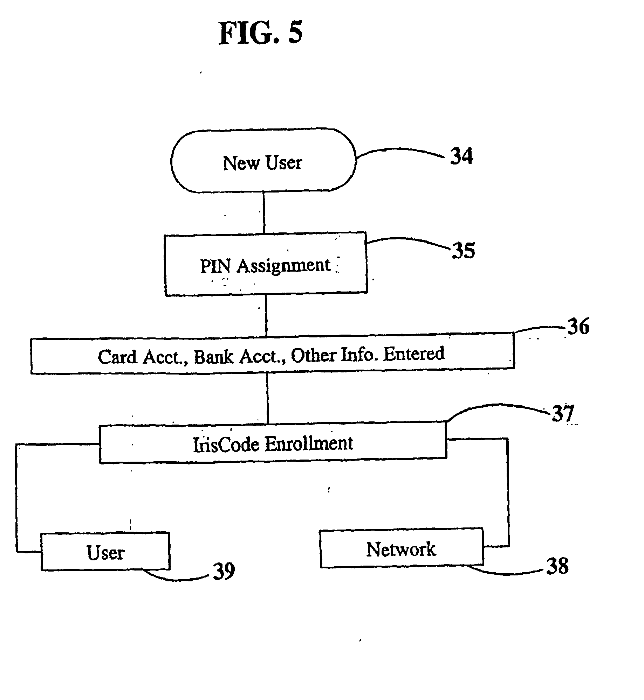

**FIGURE 5** is a chart showing an embodiment of a method for activating the present system upon enrollment of a new user **34**. The user is assigned a personal identification number (PIN) **35** that is used by the user at the time of a transaction for identification. The card account and banking account information **36** of the user is entered onto the device through data transmission or manual input. The various card accounts, for example, Visa™, MasterCard™, Diners Club™, are identified by a card identification number (CIN). Likewise, banking account information, for example, checking accounts, savings accounts, CDs, and business checking accounts, are identified by an account number. Further, information 36, such as, medical information, safe deposit box identification, frequent flier information, and insurance policy information may be entered. During the transaction, the user's iris image **37** is captured by a camera and compared to the transmitted IrisCode. The network **38** recognizes the terminals by the terminal identification number (TIN) and indexes the TIN for IrisCode searching/matching. The user's **39** IrisCode is stored in an encrypted mode and verified within two feet of a transaction terminal.

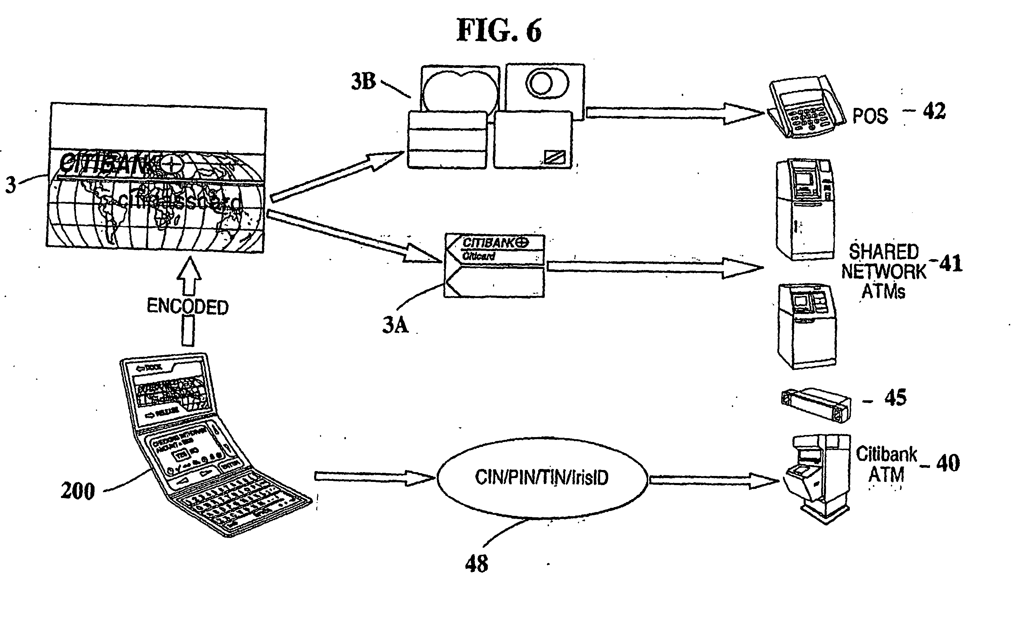

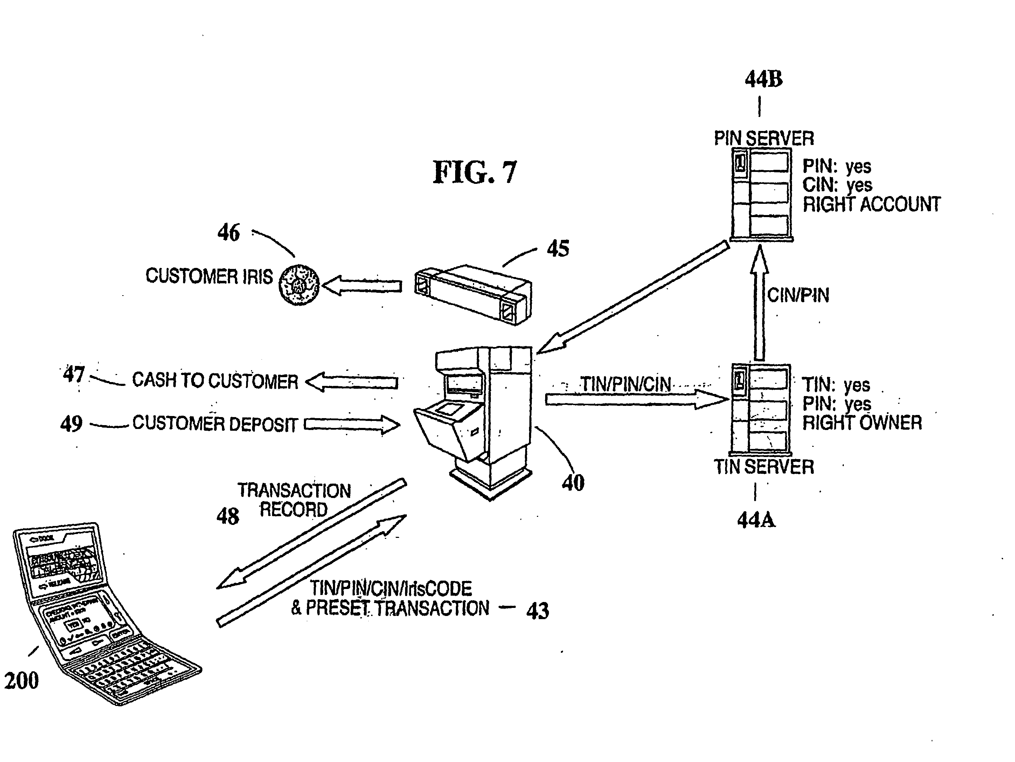

Referring now to **FIGURE 6**, there is shown an overall system illustrating the interaction between device **200**, which may also be embodiment **100** or **300**, and associated "on-us" ATM **40**, as well as, and shared network ATM **41** and POS terminal **42**. In an embodiment of the "on-us" transaction shown in more detail in **FIGURE 7**, a user pre-programs a desired transaction **43** into the memory of device **200**. For example, the user may preset the transaction at home. As the user approaches the ATM, at a point within **10** meters for RF transmission, the user's stored information **43** is transmitted automatically (when in an automatic mode) according to claim 1 or is transmitted upon user initiation to an "on-us" ATM **40** to begin a transaction (not claimed). The stored information **43** including CIN, PIN, TIN, and IrisCode, along with the pre-programmed transaction request, is transmitted to the ATM. The transmission can be via either IRDA or RF, or other transmission systems, such as, transponder systems. The user's information **43** is received by the ATM **40** via a transceiver. The ATM verifies the transmitted TIN/PIN/CIN with the ATM's network servers **44A** and **44B**. In this embodiment, a camera **45**, for example a Sensar Inc. camera, at the ATM captures the iris image **46** of the user and verifies it with the encrypted IrisCode **43** transmitted to the ATM **40**. Once the transaction is authorized, for example, a cash withdrawal transaction **47**, the user takes the cash and receives a wireless download of the transaction record **48** via RF. The device will receive the download even if it is in the user's pocket. Many different types of transactions may be performed, including deposits 49 made by the user into an account.

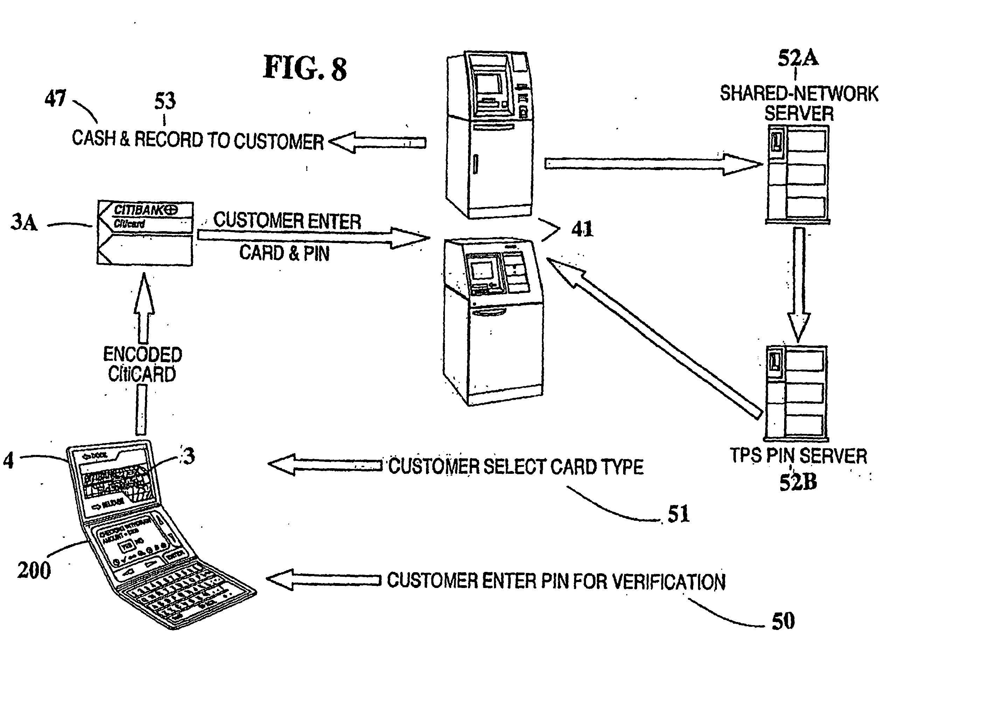

The following uses of device **200** (Figures 8-11) are not covered by claim 1. In a shared network transaction, shown in **FIGURE 8**, device **200** may be used to write to a universal **3** magnetic stripe or a smartcard, which can then be used at a card reader at shared network ATM **41**. The user begins by entering the PIN **50** for verifying user's access to the device **200**. The device **200** is used to select **51** which of the several card formats stored in memory the user wishes to use for the given transaction. The selected card information is then written onto the universal card **3** via card reader/writer **4**. Universal card **3** then acts as the selected card for a typical transaction at, for example, a shared network ATM **41** or POS terminal. The encoded universal card is entered into the ATM **41**. The ATM verifies the PIN with the ATM's servers **52A** and **52B**. Once the transaction, for example, a cash withdrawal **47**, is authorized, the user takes the cash and receives a transaction record **53** via display or traditional paper receipt.

When the universal card **3** is embodied as a smart card, the card erases the encoded data after a specified duration, for example, ten minutes. With the universal card **3** embodied as a magnetic stripe card, the device erases the data from the card once the card has been docked and/or after a specified time interval.

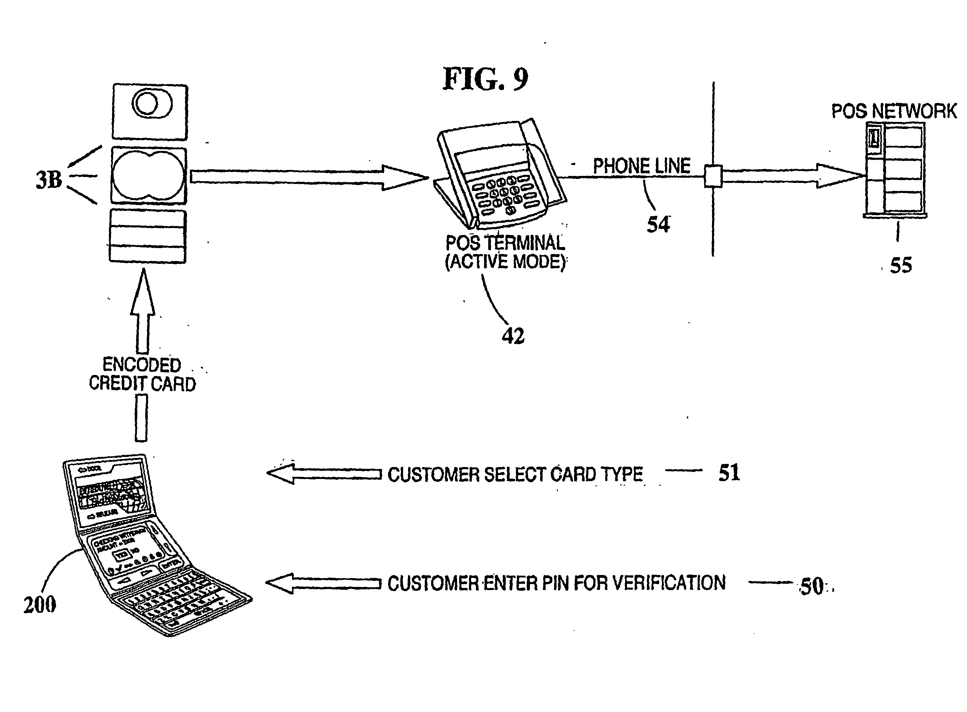

In **FIGURE 9**, a POS transaction is shown in further detail. For example, a user desires to make a purchase at a store. The user enters the PIN **50** for verifying user's access to the device **200**. The user selects **51** the type of credit card account with which to make the purchase. The universal card is encoded as the desired credit card **3B**, and the card is processed at a POS terminal **42** which is connected via a phone line **54** to a POS network **55**. The POS terminal **42** displays whether the transaction is authorized.

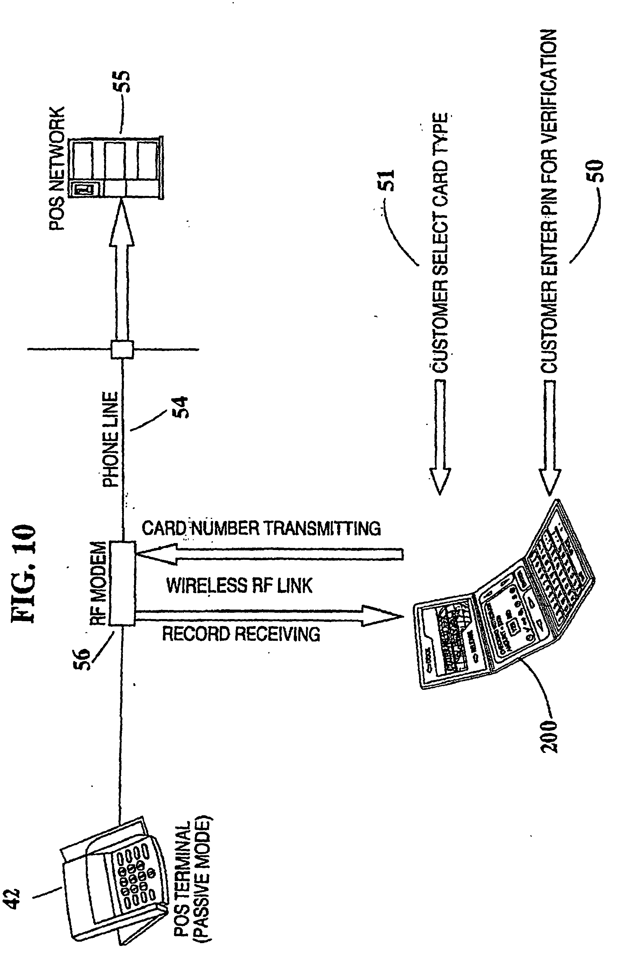

In **FIGURE 10**, a transaction is illustrated wherein the POS terminal **42** is in a passive mode. In this embodiment, the user again enters the PIN **50** for verifying user's access to the device **200**. The user selects **51** the type of credit card account with which to make the purchase. An RF modem **56** is linked with the POS network **55**. The device **200** is used to transmit via RF the selected transaction to the RF modem **56**. The transaction is checked for authorization and processed. A transaction record is then transmitted via RF to the device **200**.

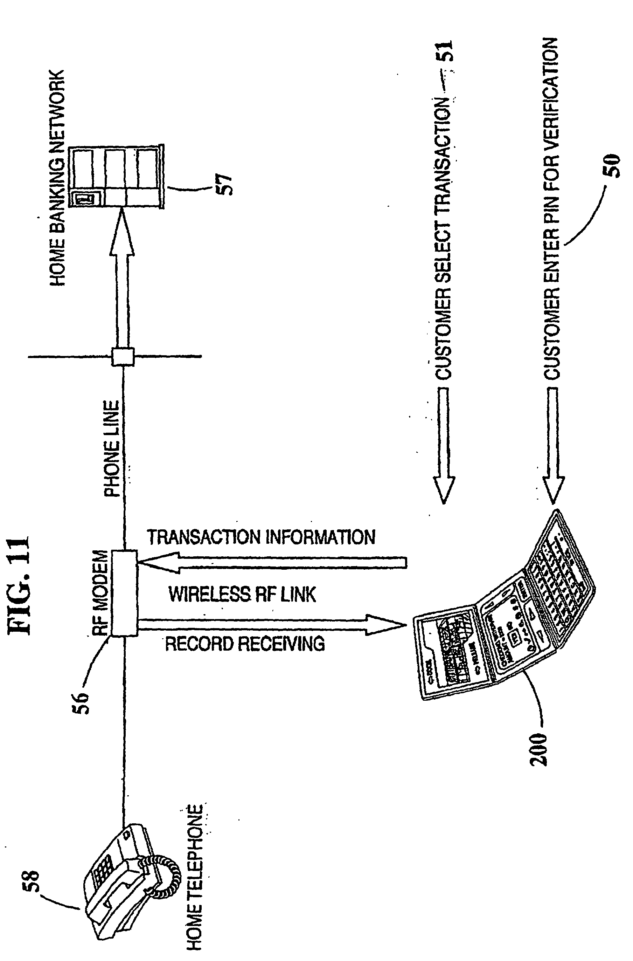

Referring now to **FIGURE 11**, there is shown a diagram illustrating the interaction between device **200** and home banking network **57**. In this embodiment, information is transferred to and from device **200** through RF modem **56** which is connected via phone **58** and phone line to a home banking network **57**. The RF modem **56** may be a low cost modem installed on the home phone line. Accordingly, the user can wirelessly access the home banking network, and the network can download account information onto the device **200**.

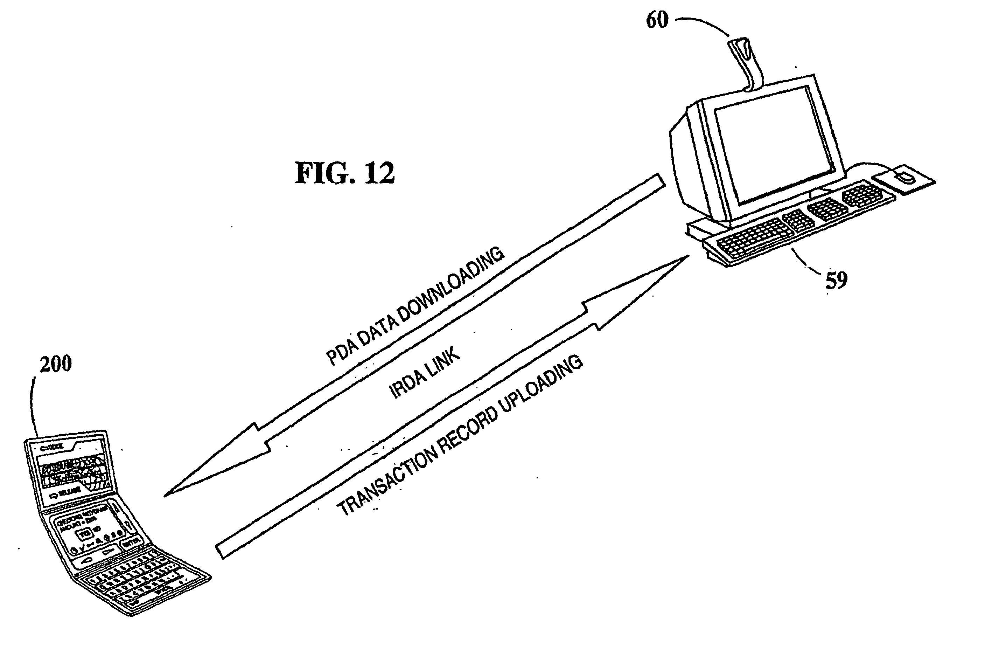

As shown in **FIGURE 12** information may also be transferred between device **200** and personal computer **59**. In this example, data transmission is via an IRDA transceiver **60** associated with the PC **59** and the device **200**. The device **200** can upload all transaction records to the PC **59** for bookkeeping, and the PC **59** can download information onto the device **200**.

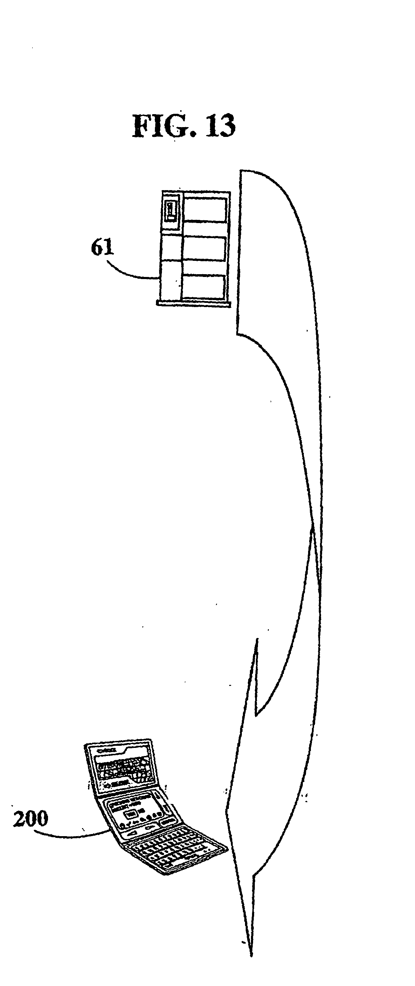

**FIGURE 13** illustrates an information updating embodiment of the present invention wherein the information stored within device **200** is updated via wireless transmission. An embodiment of this system does not require the user to have card reading/writing features associated with the device **200**. The network **95** in this example checks the user's card holder information as the user approaches an ATM. The network is wirelessly checking, for example, the expiration dates of the card accounts maintained by the user. The wireless transmission may be made via a variety of transmission systems, for example RF systems, IRDA systems, transponder systems, etc. Further, an additional service provided by the present system enables the customer to change the PIN via wireless transmission. The information downloading features are not limited to after-transaction usage of an ATM. The device **200** may be set to receive message downloading as the user comes within a predetermined range of an ATM or a bank branch. Additionally, the bank's network can deactivate a user's account when a user approaches an ATM or a branch location.

Embodiments of the present invention have now been described in fulfillment of the above objects. It should be appreciated that these examples are merely illustrative of the invention. Many variations and modifications will be apparent to those skilled in the art.

## Claims

1. An information and transaction processing system, comprising:
a portable device (100; 200; 300) with a user interface for receiving input from a user to initiate an information exchange;
a power source (25) for providing power to enable standalone operation of said device (100; 200; 300);
a central processing unit (24) operatively connected to said user interface for controlling the operation of said device(100; 200; 300);
a memory component operatively connected to said central processing unit (24), for storing information and software;
a communications module (28,29) within the device (100; 200; 300) for enabling transmission of data (43),
an encryption/decryption processor (30) within the device (100; 200; 300) for enabling encryption/decryption of data (43) transmitted via a wireless data transmission;
a terminal (40) for communicating with said device (100; 200; 300);
wherein said communications module (28,29) wirelessly transmits verification information associated with an authorized user of said device to enable said terminal (40) to verify whether said user of said device is said authorized user;
**characterised in that** said terminal (40) is an automated teller machine and that said communications module (28,29) enables, without said user's prompt, said wireless data transmission between said device (100; 200; 300) and said terminal (40) when said device (100; 200; 300) is within a communications range of said terminal.

2. The information and transaction processing system of Claim 1, **characterised in that** said terminal (40) makes biometric observations of said user and compares said observations to said verification information received from said device.

3. The information and transaction processing system of Claim 2, **characterised by** an iris identification camera (45) associated with said terminal (40) for making said biometric observations.

4. The information and transaction processing system of Claim 1, **characterised in that** said device (100; 200; 300) wirelessly transmits a preset transaction request to said automated teller machine (40).

5. The information and transaction processing system of Claim 4, wherein said automated teller machine (40) transmits a transaction record to said device (100; 200; 300) after processing said preset transaction request.

6. The information and transaction processing system of Claim 1 **characterised in that** said device (100; 200; 300) is a handheld device.

7. The information and transaction processing system of Claim 1, **characterised in that** said device (100; 200; 300) comprises a card docking port (5), wherein said card docking port has lips (6) that abut three sides of a card (3) that is docked in said docking port (5).

8. The information and transaction processing system of Claim 7, **characterised in that** said device (100; 200; 300) comprises a protective cover (7), wherein said protective cover (7) is segmented by at least two panels (8,9); and wherein said card docking port (5) is associated with a first panel (8) and a user interface is associate with another panel (9).

9. The information and transaction processing system of Claim 1 **characterised in that** said verification information associated with said authorised user is biometric information.

10. A method for performing an electronic transaction with an information and transaction processing system, comprising:
providing a portable device (100; 200; 300) with a memory component operatively connected to a central processing unit (24) and a user interface for receiving, controlling and storing input from a user to initiate an information exchange, providing a communications module (28,29) and an encryption/decryption processor (30) within the device (100; 200; 300) for enabling wireless transmission of data (43),
transmitting transactional information and verification information (43) from said device(100; 200; 300) to a terminal (40) communicating with said device (100; 200; 3 00);
verifying a user of said device (100; 200; 300) corresponding with said verification information;
**characterised by** automatically transmitting and receiving data (43,48) between said device (100; 200; 300) and said terminal (40), without said user's prompt, when said device (100; 200; 300) is within a predetermined communications range of said terminal (40).

11. The method of Claim 10 for performing an electronic transaction with an information and transaction processing system **characterised by** verifying said user of said device involves biometric observations.

12. The method of Claim 11 for performing an electronic transaction with an information and transaction processing system **characterised in that** said verification information is an iris identification code.

## Patentansprüche

1. Informations- und Transaktionsverarbeitungssystem, enthaltend:
eine tragbare Vorrichtung (100; 200; 300) mit einer Benutzerschnittstelle zum Empfangen einer Eingabe von einem Benutzer zur Initiierung eines Iriformationsaizstausches;
eine Stromquelle (25) zur Bereitstellung von Strom zur Ermöglichung bzw. Aktivierung eines unabhängigen Betriebs der Vorrichtung (100; 200; 300);
eine Zentraleinheit (24), die mit der Benutzerschnittstelle zur Steuerung des Betriebs der Vorrichtung (100; 200; 300) funktionsfähig verbunden ist;
eine Speicherkomponente, die mit der Zentraleinheit (24) funktionsfähig verbunden ist, um Informationen und Software zu speichern;
ein Kommunikationsmodul (28, 29) in der Vorrichtung (100; 200; 300) zur Ermöglichung bzw. Aktivierung der Übertragung von Daten (43),
einen Verschlüsselungs-/Entschlüsselungsprozessor (30) in der Vorrichtung (100; 200; 300) zur Ermöglichung bzw. Aktivierung einer Verschlüsselung/Entschlüsselung von Daten (43), die mittels einer drahtlosen Datenübertragung übertragen werden;
einen Terminal (40) zur Kommunikation mit der Vorrichtung (100; 200; 300),
wobei das Kommunikationsmodul (28, 29) eine Verifikationsinformation drahtlos überträgt, die einem zugriffsberechtigten Benutzer der Vorrichtung zugeordnet ist, um das Terminal (40) zu aktivieren, um zu verifizieren, ob der Benutzer der Vorrichtung der zugriffsberechtigte Benutzer ist;
**dadurch gekennzeichnet, dass** der Terminal (40) eine Geldautomatmaschine ist und dass das Kommunikationsmodul (28, 29) ohne die Bereitschaftsmeldung des Benutzers die drahtlose Datenübertragung zwischen der Vorrichtung (100; 200; 300) und dem Terminal (40) ermöglicht bzw. aktiviert, wenn die Vorrichtung (100; 200; 300) in einem Kommunikationsbereich des Terminals ist.

2. Informations- und Transaktionsverarbeitungssystem gemäß Anspruch 1, **dadurch gekennzeichnet, dass** der Terminal (40) biometrische Beobachtungen des Benutzers durchführt und die Beobachtungen mit der von der Vorrichtung empfangenen Verifikationsinformation vergleicht.

3. Informations- und Transaktionsverarbeitungssystem gemäß Anspruch 2, **gekennzeichnet durch** eine Irisidentifikationskamera (45), die dem Terminal (40) zugeordnet ist, um die biometrischen Beobachtungen durchzuführen.

4. Informations- und Transaktionsverarbeitungssystem gemäß Anspruch 1, **dadurch gekennzeichnet, dass** die Vorrichtung (100; 200; 300) eine voreingestellte Transaktionsanforderung zu der Geldautomatmaschine (40) drahtlos überträgt.

5. Informations- und Transaktionsverarbeitungssystem gemäß Anspruch 4, wobei die Geldautomatmaschine (40) eine Transaktionsaufzeichnung zu der Vorrichtung (100; 200; 300) nach Verarbeitung der voreingestellten Transaktionsanforderung überträgt.

6. Informations- und Transaktionsverarbeitungssystem gemäß Anspruch 1, **dadurch gekennzeichnet, dass** die Vorrichtung (100; 200; 300) eine tragbare Vorrichtung ist.

7. Informations- und Transaktionsverarbeitungssystem gemäß Anspruch 1, **dadurch gekennzeichnet, dass** die Vorrichtung (100; 200; 300) einen Kartendockport (5) enthält, wobei der Kartendockport Ränder (6) aufweist, die an drei Seiten einer Karte (3) anstoßen, die in dem Dockport (5) gedockt ist.

8. Informations- und Transaktionsverarbeitungssystem gemäß Anspruch 7, **dadurch gekennzeichnet, dass** die Vorrichtung (100; 200; 300) eine Schutzhülle (7) enthält, wobei die Schutzhülle (7) durch wenigstens zwei Platten (8, 9) segmentiert ist; und wobei der Kartendockport (5) einer ersten Platte (8) zugeordnet ist und eine Benutzerschnittstelle einer anderen Platte (9) zugeordnet ist.

9. Informations- und Transaktionsverarbeitungssystem gemäß Anspruch 1, **dadurch gekennzeichnet, dass** die dem zugriffsberechtigten Benutzer zugeordnete Verifikationsinformation eine biometrische Information ist.

10. Verfahren zur Durchführung einer elektronischen Transaktion mit einem Informations- und Transaktionsverarbeitungssystem, enthaltend:
Bereitstellen einer tragbaren Vorrichtung (100; 200; 300) mit einer Speicherkomponente, die mit einer Zentraleinheit (24) und einer Benutzerschnittstelle verbunden ist, um eine Eingabe von einem Benutzer zur Initiierung eines Informationsaustausches zu empfangen, zu steuern und zu speichern,
Bereitstellen eines Kommunikationsmoduls (28, 29) und eines Verschlüsselungs/Entschlüsselungsprozessors (30) in der Vorrichtung (100; 200; 300), um eine drahtlose Übertragung von Daten (43) zu ermöglichen bzw. zu aktivieren,
Übertragen einer Transaktionsinformation und Verifikationsinformation (43) von der Vorrichtung (100; 200; 300) zu einem Terminal (40), der mit der Vorrichtung (100; 200; 300) kommuniziert;
Verifizieren eines Benutzers der Vorrichtung (100; 200; 300) entsprechend der Verifikationsinformation;
**gekennzeichnet durch** automatisches Übertragen und Empfangen von Daten (43, 48) zwischen der Vorrichtung (100; 200; 300) und dem Terminal (40) ohne die Bereitschaftsmeldung des Benutzers, wenn die Vorrichtung (100; 200; 300) in einem vorbestimmten Kommunikationsbereich des Terminals (40) ist.

11. Verfahren gemäß Anspruch 10 zur Durchführung einer elektronischen Transaktion mit einem Informations- und Transaktionsverarbeitungssystem, **dadurch gekennzeichnet, dass** das Verifizieren des Benutzers der Vorrichtung biometrische Beobachtungen involviert.

12. Verfahren gemäß Anspruch 11 zur Durchführung einer elektronischen Transaktion mit einem Informations- und Transaktionsverarbeitungssystem, **dadurch gekennzeichnet, dass** die Verifikationsinformation ein Irisidentifikationscode ist.

## Revendications

1. Système de traitement d'informations et de transactions comprenant :
un dispositif portable (100 ; 200 ; 300) avec une interface d'utilisateur pour recevoir une entrée provenant d'un utilisateur pour commencer un échange d'informations ;
une source d'énergie (25) pour fournir de l'énergie pour permettre un fonctionnement autonome dudit dispositif (100 ; 200 ; 300) ;
une unité centrale de traitement (24) connecté en fonctionnement à ladite interface d'utilisateur pour contrôler le fonctionnement dudit dispositif (100 ; 200 ; 300) ;
un composant de mémoire connecté en fonctionnement à ladite unité centrale de traitement (24), pour mémoriser des informations et du logiciel ;
un module de communication (28, 29) à l'intérieur dudit dispositif (100 ; 200 ; 300) pour permettre une transmission de données (43) ;
un processeur de cryptage/décryptage (30) à l'intérieur dudit dispositif (100 ; 200 ; 300) pour permettre le cryptage/décryptage de données (43) transmises via line transmission de données sans fil ;
un terminal (40) pour communiquer avec ledit dispositif (100 ; 200 ; 300) ;
dans lequel ledit module de communication (28, 29) transmet sans fil des informations de vérification associées à un utilisateur autorisé dudit dispositif pour permettre audit terminal (40) de vérifier si ledit utilisateur dudit dispositif est ledit utilisateur autorisé ;
**caractérisé en ce que** ledit terminal (40) est un guichet automatique de banque et **en ce que** ledit module de communication (28, 29) permet, sans ledit message d'invitation de l'utilisateur, ladite transmission de données entre ledit dispositif (100 ; 200 ; 300) et ledit terminal (40) quand ledit dispositif (100 ; 200 ; 300) est dans une plage de communication dudit terminal.

2. Système de traitement d'informations et de transactions selon la revendication 1, **caractérisé en ce que** ledit terminal (40) effectue des observations biométriques dudit utilisateur et compare lesdites observations avec lesdites informations de vérification reçues dudit dispositif.

3. Système de traitement d'informations et de transactions selon la revendication 2, **caractérisé par** une caméra d'identification d'iris (45) associée audit terminal (40) pour effectuer lesdites observations biométriques.

4. Système de traitement d'informations et de transactions selon la revendication 1, **caractérisé en ce que** ledit dispositif (100; 200 ; 300) transmet sans fil une demande de transaction prédéterminée audit guichet automatique de banque (40).

5. Système de traitement d'informations et de transactions selon la revendication 4, **caractérisé en ce que** ledit guichet automatique de banque (40) transmet un enregistrement de transaction audit dispositif (100 ; 200 ; 300) après avoir traité ladite demande de transaction prédéterminée.

6. Système de traitement d'informations et de transactions selon la revendication 1, **caractérisé en ce que** ledit dispositif (100 ; 200 ; 300) est un dispositif de poche.

7. Système de traitement d'informations et de transactions selon la revendication 1, **caractérisé en ce que** ledit dispositif (100 ; 200 ; 300) comprend un port de réception de carte (5), dans lequel ledit port de réception de carte a des lèvres (6) qui sont en butées avec trois côtés d'une carte (3) qui est reçue dans ledit port de réception (5).

8. Système de traitement d'informations et de transactions selon la revendication 7, **caractérisé en ce que** ledit dispositif (100 ; 200 ; 300) comprend un couvercle de protection (7), dans lequel ledit couvercle de protection (7) est divisé en au moins deux panneaux (8, 9) ; et dans lequel ledit port de réception de carte (5) est associé à un premier panneau (8) et une interface d'utilisateur est associée à un autre panneau (9).

9. Système de traitement d'informations et de transactions selon la revendication 1, **caractérisé en ce que** lesdites informations de vérification associées audit utilisateur autorisé sont des informations biométriques.

10. Procédé pour effectuer une transaction électronique avec un système de traitement d'informations et de transactions, comprenant les étapes consistant à :
fournir un dispositif portable (100 ; 200 ; 300) avec un composant de mémoire connecté en fonctionnement à une unité centrale de traitement (24) et une interface d'utilisateur pour recevoir, contrôler et mémoriser des entrées provenant d'un utilisateur pour commencer un échange d'informations ;
fournir un module de communication (28, 29) et un processeur de cryptage/décryptage (30) à l'intérieur du dispositif (100 ; 200 ; 300) pour permettre une transmission sans fil de données (43) ;
transmettre des informations de transaction et des informations de vérification (43) dudit dispositif (100 ; 200 ; 300) à un terminal (40) communiquant avec ledit dispositif (100 ; 200 ; 300) ;
vérifier un utilisateur dudit dispositif (100 ; 200 ; 300) correspondant aux dites informations de vérification ;
**caractérisé par** une transmission et une réception automatique de données (43, 48) entre ledit dispositif (100 ; 200 ; 300) et ledit terminal (40), sans ledit message d'invitation de l'utilisateur, quand ledit dispositif (100; 200 ; 300) est dans une plage de communication dudit terminal (40).

11. Procédé selon la revendication 10 pour effectuer une transaction électronique avec un système de traitement d'informations et de transactions, **caractérisé en ce que** la vérification dudit utilisateur dudit dispositif implique des observations biométriques.

12. Procédé selon la revendication 10 pour effectuer une transaction électronique avec un système de traitement d'informations et de transactions, **caractérisé en ce que** lesdites informations de vérification sont un code d'identification d'iris.
